# EUROPEAN PATENT APPLICATION

(11) **EP 1 933 438 A2**
(43) Date of publication of application: **18.06.2008**
(21) Application number: 07445045.3
(22) Date of filing: 13.12.2007
(51) Int. Cl.: H02H 3/20

(54) **Over-voltage protection arrangement**

(30) Priority: 13.12.2006 SE 0602687
(71) Applicant: Powerwave Technologies Sweden AB, 164 40 Kista (SE)
(72) Inventor: Andersson, Per-Erik, 135 30 Tyresö (SE); Salovaara, Kim, 181 64 Lidingö (SE)
(74) Representative: Janson, Ronny

(57) **Abstract**

Over-voltage protection arrangement (1) for protecting an electric device from over-voltages, the arrangement including an input voltage terminal (2), to be connected to a voltage feed, and an output voltage terminal (3), to be connected to the electric device to be protected, whereby the arrangement (1) is adapted to protect the electric device from voltages on the voltage feed deviating from a predefined threshold range, the arrangement further including a field effect transistor (4) connected in between the input terminal (2) and the output terminal (3) so as to enable an electric connection between said terminals (2,3). The arrangement (1) is distinguished by: - at least one trigger circuit (6a, 6b) being adapted to respond to a trigger voltage, a voltage on the voltage feed deviating from the threshold range, by controlling the field effect transistor (4) to throttle the electric connection between the input (2) and output (3) terminals.

## Description

### Field of the invention

The present invention concerns an arrangement according to the preamble of claim 1.

### Prior art

It is previously known to provide electronic equipment with an over-voltage protection. An over-voltage protection is necessitated by the prevalence of electric over-voltages in the environment of said equipment, due for instance from poor electricity supply networks or the strong electric fields deriving from lightning. Even though such electronic equipment can be shielded with a shield to avoid influence from the electric fields of lightning, often some type of connection to or from such equipment calls for the penetration of the shield. Such connections can for instance be a mains cable or a control cable. Because of that, it is possible for an over-voltage to find its way into the equipment, via such a cable.

One approach to such an over-voltage protection is to use a relay that is controlled to break an electric connection when the presence of an over-voltage is detected. However, relays are relatively slow in switching between a conducting and a non-conducting state. In some contexts, the performance of a relay might not be enough.

A further problem inherent in earlier designs is that they often imply complex circuits with many components. Due to the relatively large number of components, the design of such over-voltage protections becomes complicated when many of these components must have a robust specification. Also, a large number of components in an over-voltage protection generally mean that the protection becomes less rapid in response to a sudden over-voltage.

### The object of the invention and its most important characteristics

It is an object of the present invention to propose a solution for or a reduction of the problems of prior art. A main object is consequently to propose an over-voltage protection arrangement that provide rapid protection to over-voltages while being relatively simple in construction.

According to the invention this is accomplished by an arrangement having the features of claim 1.

According to the invention, an over-voltage protection arrangement is accomplished with a field effect transistor (FET) and at least one trigger circuit. The FET is made to throttle an electric connection to be protected from over-voltages when a trigger circuit detects an over-voltage on that electric connection. Due to the use of a FET, relatively few components can be employed, making the over-voltage protection arrangement easier to construct and giving it a faster response.

Additional beneficial embodiments of the invention are disclosed in the depending claims.

The patent application US 2006/0023381 A1 discloses a protection arrangement using a field effect transistor connected in between an input terminal and an output terminal. However, the protection arrangement according to US 2006/0023381 A1 is only effective as a polarity protection and does not include any trigger circuit adapted to respond to a voltage on the input terminal. In fact, the protection arrangement of US 2006/0023381 A1 implements in principle an ideal diode.

### Short description of the drawings

Embodiments exemplifying the invention will now be described, by means of the appended drawing, on which

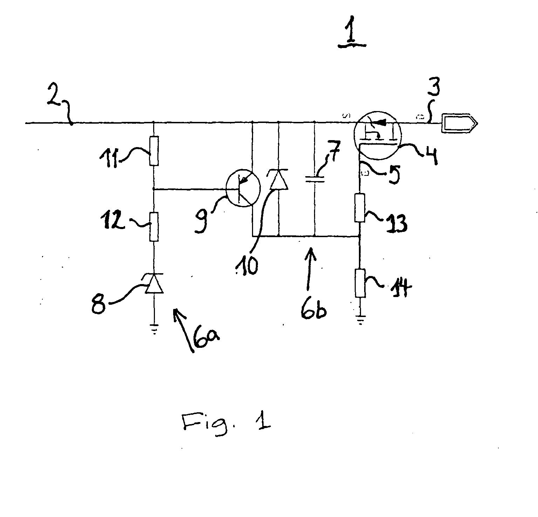

Fig. 1 illustrates a circuit diagram of an embodiment of the invention.

### Description of an exemplary embodiment

Fig. 1 illustrates schematically an arrangement according to the invention. In the figure, an over-voltage protection arrangement 1 for protecting an electric device from over-voltages is shown. The arrangement 1 includes an input voltage terminal 2, to be connected to a voltage feed, and an output voltage terminal 3, to be connected to the electric device to be protected. The voltage feed and the electric device to be protected are not shown in the figure. The arrangement 1 is adapted to protect the electric device from voltages on the voltage feed deviating from a predefined threshold range, and according to the invention this is accomplished using a field effect transistor (FET) 4 and at least one trigger circuit 6a, 6b.

The FET 4 is connected in between the input 2 and output 3 voltage terminals so as to enable an electric connection between said terminals 2, 3. At least one trigger circuit 6a, 6b is provided and is adapted to respond to a trigger voltage, a voltage on the voltage feed deviating from the threshold range, by controlling the field effect transistor 4 to throttle the electric connection between the input 2 and output 3 terminals.

A preferred way to connect the FET 4 to achieve the throttling effect is to have a conduction channel of the FET 4 connected in between the input 2 and output 3 terminals, as is depicted in fig. 1. In this manner, the electric connection between said terminals 2,3 is established when the conduction channel is conducting, and the electric connection between said terminals 2,3 is throttled when the conduction channel is throttled. In order to throttle the conduction channel, at least one trigger circuit 6a, 6b is arranged to apply a voltage to the gate 5 of FET 4.

The nature of over-voltages differs. In order to provide protection for both fast and slow type of over-voltages, multiple trigger circuits 6 can be provided. For instance, one trigger circuit could be designed for the response to transient trigger voltages, i.e. to respond to over-voltages having a transient behaviour. In fig. 1, this is accomplished with a capacitor 7 that is adapted to apply transient trigger voltages to the gate 5. The capacitor will only be effective for transient voltages, as only such voltages from the input terminal 2 are passed through the capacitor 7. These voltages will then give rise to a voltage drop over the resistor 14. Due to the voltage drop over resistor 14, there will also be a voltage on gate 5 different from zero.

For the protection against slow or essentially stationary over-voltages, at least one trigger circuit could be adapted to respond to such voltages. In fig. 1 such a trigger circuit 6a is accomplished using a break down diode 8, for instance a Zener-diode. When the diode 8 is submitted to an over-voltage, it controls a transistor 9 to apply a voltage to the gate 5.

The field effect transistor 4 of the invention could be a MOS-field effect transistor. For instance, a p-MOS-field effect transistor.

The threshold range, for which voltages are transmitted to the output terminal 3 could vary according to application. For instance one range that could be used for many purposes is about -40 to 40 volts, but other ranges are possible. Such other ranges would be subject to finding components, especially the FET, having appropriate ratings.

The protection arrangement of Fig. 1 is specially designed to handle positive voltages, for instance 0 to 40 V. However, the principle of the invention, using a FET and at least one trigger circuit to throttle the FET in case of an over-voltage on the voltage feed could also be employed for negative voltages.

Thus, an arrangement handling a range of negative voltages would require some modifications of the arrangement of fig. 1, whereby the same principle is put to use as in fig. 1. Namely, using the FET as a switch and having at least one trigger circuit. When the trigger circuit detects an over-voltage on the voltage feed, it shuts the FET off. An example of such a range of negative voltages could for instance be -40 to 0 V.

An arrangement for a range of -40 to 40 V could for instance be achieved using an arrangement for 0 to 40 V together with an arrangement for -40 to 0 V, as above.

Also, the setting of a specific threshold range is achieved through varying of the particular values of the components, such as the values of resistors 11, 12, 13, 14, capacitor 7, break down diode 8, transistor 9, etc.

As an extra precaution, the arrangement 1 could be provided with a protection device 10, which is adapted to protect the arrangement 1 from high-energy over-voltages. Even though the arrangement is able to protect a device from over-voltages, and therefore consists of sturdy components, it too has a limit on energy exposure. By having a protection device that is able to transmit excess energies to ground, such exposure is mitigated. An example of such a protection device 10 is a break-down/avalanche type diode 10.

In the present application, the input voltage terminal 2 has been said to be connected to a voltage feed. It is understood that such a voltage feed also encompass any type of cable or conductor which might transmit over-voltages, such as a control cable.

### Legend

1. Over-voltage protection arrangement
2. Input voltage terminal
3. Output voltage terminal
4. Field effect transistor
5. Gate
6. Trigger circuit
7. Capacitor
8. Break down diode
9. Transistor
10. Protection device
11. Resistor
12. Resistor
13. Resistor
14. Resistor

## Claims

1. Over-voltage protection arrangement (1) for protecting an electric device from over-voltages, the arrangement including an input voltage terminal (2), to be connected to a voltage feed, and an output voltage terminal (3), to be connected to the electric device to be protected, whereby the arrangement (1) is adapted to protect the electric device from voltages on the voltage feed deviating from a predefined threshold range, the arrangement further including a field effect transistor (4), connected in between the input terminal (2) and the output terminal (3) so as to enable an electric connection between said terminals (2,3), **characterised in that** the arrangement includes:
- at least one trigger circuit (6a, 6b), the at least one trigger circuit (6a, 6b) being adapted to respond to a trigger voltage, a voltage on the voltage feed deviating from the threshold range, by controlling the field effect transistor (4) to throttle the electric connection between the input (2) and output (3) terminals.

2. Over-voltage protection arrangement (1) according to claim 1, **characterised in that** the field effect transistor (4), said field effect transistor (4) including a gate (5) and a conduction channel, is arranged with the conduction channel connected in between the input (2) and output (3) terminals, so that the electric connection between said terminals (2,3) is established when the conduction channel is conducting and the electric connection between said terminals (2,3) is throttled when the conduction channel is throttled, whereby the at least one trigger circuit (6a, 6b) is arranged to throttle the conduction channel through the application of a voltage to the gate (5).

3. Over-voltage protection arrangement (1) according to claims 1 or 2, **characterised in that** at least one trigger circuit (6b) is adapted to respond to transient trigger voltages.

4. Over-voltage protection arrangement (1) according to claim 3, **characterised in that** response to transient trigger voltages is accomplished by including a capacitor (7) adapted to apply transient trigger voltages to the gate (5).

5. Over-voltage protection arrangement (1) according to any of claims 1-4, **characterised in that** at least one trigger circuit (6a) is adapted to respond to essentially stationary trigger voltages.

6. Over-voltage protection arrangement (1) according to claim 5, **characterised in that** response to essentially stationary trigger voltages is accomplished by including a break down diode (8) adapted, when submitted to an over-voltage, to control a transistor (9) to apply the voltage to the gate (5).

7. Over-voltage protection arrangement (1) according to any of claims 1-6, **characterised in that** the field effect transistor (4) is a MOS-field effect transistor.

8. Over-voltage protection arrangement (1) according to claim 7, **characterised in that** the field effect transistor (4) is a p-MOS-field effect transistor.

9. Over-voltage protection arrangement (1) according to any of claims 1-8, **characterised in that** the threshold range is about -40 to 40 volts.

10. Over-voltage protection arrangement (1) according to any of claims 1-9, **characterised in that** the arrangement (1) includes a protection device (10), adapted to protect the arrangement (1) by transmitting excess energies to ground.

11. Over-voltage protection arrangement (1) according to claim 10, **characterised in that** the protection device (10) is a break-down/avalanche type diode.
